# EUROPÄISCHE PATENTANMELDUNG

(11) **EP 4 807 418 A1**
(43) Veröffentlichungstag der Anmeldung: **16.09.2026**
(21) Anmeldenummer: 25162817.8
(22) Anmeldetag: 11.03.2025
(51) Int. Cl.: G02B 6/38

(54) **ANORDNUNG ZUM ZUGABFANG EINES KABELS, STECKVERBINDERANORDNUNG UND VERFAHREN ZUR MONTAGE EINES KABELS IN EINEM STECKVERBINDER**

(71) Anmelder: Rosenberger Hochfrequenztechnik GmbH & Co. KG, 83413 Fridolfing (DE)
(72) Erfinder: Fischer, Andreas, 83413 Fridolfing (DE); Bredbeck, Till, 83413 Fridolfing (DE)
(74) Vertreter: Lorenz & Kollegen

(57) **Zusammenfassung**

Die Erfindung betrifft eine Anordnung (1) zum Zugabfang eines Kabels (2), insbesondere eines optischen Kabels (2), aufweisend das Kabel (2) und ein auf dem Kabel (2) mittels eines Klebstoffes (18) befestigtes Zugsicherungsbauteil (14). Es ist vorgesehen, dass ein Kabelmantel (8) des Kabels (2) innerhalb des Zugsicherungsbauteils (14) abschnittsweise umfangsseitig entfernt oder entlang einer Kabellängsachse (L) vollständig umlaufend unterbrochen ist, so dass ein Hohlraum (16) zwischen einer Innenseite (15) des Zugsicherungsbauteils (14) und einer unterhalb des Kabelmantels (8) verlaufenden Kabelschicht (7) des Kabels (2) gebildet ist, in den der Klebstoff (18) eingebracht ist.

## Beschreibung

Die Erfindung betrifft eine Anordnung zum Zugabfang eines Kabels, insbesondere eines optischen Kabels, aufweisend das Kabel und ein auf dem Kabel mittels eines Klebstoffes befestigtes Zugsicherungsbauteil, gemäß dem Oberbegriff des Anspruchs 1.

Die Erfindung betrifft ferner eine Steckverbinderanordnung, aufweisend einen Steckverbinder, insbesondere einen optischen Steckverbinder, und eine Anordnung zum Zugabfang eines Kabels.

Die Erfindung betrifft außerdem ein Verfahren zur Montage eines Kabels in einem Steckverbinder.

Aus der Verbindungstechnik sind diverse elektrische und optische Kabelsteckverbinder bekannt. Steckverbinder dienen bekanntermaßen dazu, Datensignale und/oder elektrische Leistung an korrespondierende Gegensteckverbinder zu übertragen. Bei einem Steckverbinder bzw. Gegensteckverbinder kann es sich unter anderem um einen Stecker, eine Buchse oder eine Kupplung handeln. Die im Rahmen der Erfindung verwendete Bezeichnung "Steckverbinder" bzw. "Gegensteckverbinder" steht stellvertretend für alle Varianten.

Bei einem Kabelsteckverbinder spielt die mechanische Befestigung der Kabel innerhalb des Steckverbindergehäuses eine wesentliche Rolle, so dass Zug- und/oder Querkräfte, die im Betrieb auf das Kabel einwirken, keine Beschädigung der Steckverbinderanordnung verursachen.

Eine weit verbreitete Methode zum Kabelzugabfang ist die Crimptechnik, bei der eine Hülse oder ein sonstiges Gehäusebauteil mittels plastischer Verformung auf das Kabel aufgebracht wird. Bei elektrischen Steckverbindern dient das Crimpen regelmäßig nicht nur der mechanischen Fixierung, sondern häufig auch der elektrischen Kontaktierung eines Außenleiters des Kabels. Bei optischen Steckverbindern hingegen kommt die Crimptechnik in der Regel nur zur mechanischen Fixierung der optischen Kabel zum Einsatz.

Nachteilig an den bekannten Crimpverfahren ist jedoch, dass die Crimpverbindung einerseits eine ausreichende Festigkeit aufweisen muss, um mechanischen Belastungen durch Kabelzug standzuhalten, andererseits aber keine übermäßige Quetschung des Kabels auftreten darf, um die elektrischen oder optischen Leiter innerhalb des Kabels nicht zu beschädigen.

Insbesondere aus Kostengründen, beispielsweise zur Einsparung von metallischen Stütz- bzw. Crimphülsen, ist es auch bekannt, zur Fixierung der Kabel in dem Steckverbinder eine Klebetechnik einzusetzen. Beispielsweise offenbart die US 6,331,080 B1 eine Klebetechnik zur Fixierung eines optischen Kabels in einem optischen Steckverbinder. Der Klebstoff wird dabei derart in das Steckverbindergehäuses eingebracht, dass er in unmittelbarem Kontakt mit in dem optischen Kabel verlaufenden Verstärkungsfasern steht.

Es hat sich allerdings gezeigt, dass die bekannten Klebetechniken im Rahmen eines automatisierten Montageprozesses nur unter großem Aufwand einsetzbar sind und bei besonders hohen mechanischen Belastungen mitunter auch keine ausreichend zuverlässige mechanische Fixierung bieten.

In Anbetracht des bekannten Stands der Technik besteht die Aufgabe der vorliegenden Erfindung darin, eine Anordnung zum Zugabfang eines Kabels bereitzustellen, mit einer besonders hohen mechanischen Haltekraft, die sich vorzugsweise vorteilhaft im Rahmen eines teil- oder vollautomatisierten Montageprozesses herstellen lässt.

Der vorliegenden Erfindung liegt auch die Aufgabe zugrunde, eine Steckverbinderanordnung bereitzustellen, mit einem mechanisch hochbelastbaren Kabelzugabfang, die sich vorzugsweise vorteilhaft im Rahmen eines teil- oder vollautomatisierten Montageprozesses herstellen lässt.

Schließlich ist es auch Aufgabe der Erfindung, ein Verfahren zur Montage eines Kabels in einem Steckverbinder bereitzustellen, vorzugsweise ein zumindest teilautomatisiertes Verfahren, mit dem eine mechanisch hochbelastbare Fixierung des Kabels an dem Steckverbinder ermöglicht wird.

Die Aufgabe wird für die Anordnung zum Zugabfang mit den in Anspruch 1 aufgeführten Merkmalen gelöst. Hinsichtlich der Steckverbinderanordnung wird die Aufgabe durch die Merkmale des Anspruchs 14 und bezüglich des Verfahrens durch die Merkmale des Anspruchs 15 gelöst.

Die abhängigen Ansprüche und die nachfolgend beschriebenen Merkmale betreffen vorteilhafte Ausführungsformen und Varianten der Erfindung.

Die Erfindung betrifft eine Anordnung zum Zugabfang eines Kabels, aufweisend das Kabel und ein auf dem Kabel mittels eines Klebstoffes befestigtes Zugsicherungsbauteil.

Bei dem Kabel kann es sich im Rahmen der Erfindung um ein elektrisches oder optisches Kabel mit einem beliebigen Aufbau handeln. Die Erfindung kann sich außerdem auch vorteilhaft für so genannte Hybridkabel eignen, also Kabel mit elektrischen und optischen Leitern.

Ein elektrisches Kabel im Rahmen der Erfindung kann einen oder mehrere elektrische Leiter aufweisen, insbesondere einen oder mehrere Innenleiter und optional einen über ein Dielektrikum von den Innenleitern beabstandeten, die Innenleiter gemeinsam umhüllenden Außenleiter (z. B. ein Kabelschirmgeflecht und/oder eine Schirmungsfolie). Bei dem elektrischen Kabel kann es sich beispielsweise um ein Koaxialkabel, um ein Twisted-Pair-Kabel oder um ein Parallel-Pair-Kabel handeln. Das elektrische Kabel kann unter anderem als Datenkabel (z. B. Hochfrequenzkabel) und/oder Versorgungskabel (z. B. Hochvoltkabel für ein Automobil) ausgebildet sein.

Ein optisches Kabel im Rahmen der Erfindung kann wenigstens einen Lichtwellenleiter aufweisen, der zur Übertragung optischer Signale dient. Der Lichtwellenleiter kann insbesondere Glas oder Kunststoff aufweisen, beispielsweise Glasfasern oder Kunststofffasern, und von einer oder mehreren Schutzschichten umgeben sein.

Der Aufbau von elektrischen und optischen Kabeln und deren Steckverbindern ist grundsätzlich bekannt, weshalb auf weitere Details und weitere Beispiele vorliegend verzichtet wird. Die Erfindung eignet sich grundsätzlich für beliebige Kabel- und Steckverbinderarten. Das Kabel kann insbesondere auch einen beliebigen Querschnitt aufweisen, einschließlich runder oder flacher Geometrien.

Darunter, dass das Zugsicherungsbauteil auf dem Kabel befestigt ist, ist insbesondere zu verstehen, dass sich das Kabel zumindest abschnittsweise innerhalb des Zugsicherungsbauteils befindet und beispielsweise nicht etwa nur stirnseitig an dem Zugsicherungsbauteil anschlägt oder lediglich außenseitig an einer Seitenfläche des Zugsicherungsbauteils befestigt ist. Das Kabel ist somit mit einem Abschnitt zumindest abschnittsweise in dem Zugsicherungsbauteil aufgenommen und kann damit innerhalb des Zugsicherungsbauteils enden oder durch das Zugsicherungsbauteil hindurchgeführt sein.

Das Zugsicherungsbauteil kann grundsätzlich einen beliebigen Aufbau aufweisen (z. B. einen einstückigen oder mehrteiligen Aufbau) und aus einem beliebigen Material oder aus einer beliebigen Materialkombination ausgebildet sein. Bevorzugt ist das Zugsicherungsbauteil ein einstückiges Bauteil, was für die Erfindung allerdings nicht einschränkend zu verstehen ist. Vorzugsweise ist das Zugsicherungsbauteil aus einem Metallwerkstoff und/oder aus einem Kunststoffwerkstoff ausgebildet.

Erfindungsgemäß ist vorgesehen, dass ein Kabelmantel des Kabels innerhalb des Zugsicherungsbauteils abschnittsweise umfangsseitig entfernt ist (beispielsweise fenster- oder teilringförmig) oder entlang einer Kabellängsachse vollständig umlaufend unterbrochen ist (beispielsweise durch einen im Rahmen einer Kabelbearbeitung durchgeführten Teilabzug des Kabelmantels, wie nachfolgend noch erwähnt), so dass ein Hohlraum zwischen einer Innenseite des Zugsicherungsbauteils und einer unterhalb des Kabelmantels verlaufenden Kabelschicht des Kabels gebildet ist, in den der Klebstoff eingebracht ist.

Dadurch, dass besagter Hohlraum unter anderem zwischen der Innenseite des Zugsicherungsbauteils (insbesondere dem Innenmantel bzw. einer Innenmantelfläche des Zugsicherungsbauteils) und der besagten Kabelschicht unterhalb des Kabelmantels gebildet ist, die innerhalb des Zugsicherungsbauteils jedoch nur abschnittsweise freigelegt ist, kann die mechanische Haltekraft zwischen dem Zugsicherungsbauteil und dem Kabel deutlich erhöht sein. Entlang der Kabellängsachse werden in radialer bzw. lateraler Richtung Stufen bzw. Vor- und Rücksprünge gebildet, in die der Klebstoff einzudringen vermag und die der Klebstoff daher im ausgehärteten Zustand formschlüssig hintergreift (insbesondere, wenn der Kabelmantel nur abschnittsweise umfangsseitig entfernt wurde, kann sich der ausgehärtete Klebstoff an mehreren Stellen im Kabelmantel "verkrallen"). Zusätzlich zu diesem Formschluss kann außerdem auch die stoffschlüssige Verbindung selbst verbessert sein, da dem Klebstoff eine erhöhte Klebefläche zur Verfügung gestellt wird.

Auf die vorgeschlagene Weise kann ein Kabelzugabfang bereitgestellt werden, der ohne Verwendung der Crimptechnik eine hohe Haltekraft bietet, mit dem Vorteil, dass eine Beschädigung der elektrischen oder optischen Leiter des Kabels durch übermäßige Quetschung ausgeschlossen werden kann. Des Weiteren können Gewicht und Kosten eingespart werden, da auf die Verwendung von Crimphülsen verzichtet werden kann.

Schließlich hat sich außerdem gezeigt, dass sich die Klebetechnik im Rahmen eines teilautomatisierten oder vollautomatisierten Montageprozesses technisch vorteilhaft einsetzen lässt, weshalb sich die Erfindung insbesondere für eine Massenfertigung gut eignen kann.

In einer vorteilhaften Weiterbildung der Erfindung kann vorgesehen sein, dass die besagte Kabelschicht eine unmittelbar unterhalb des Kabelmantels befindliche Kabelschicht ist.

Es hat sich gezeigt, dass sich eine unmittelbar unter dem Kabelmantel befindliche Kabelschicht besonders gut eignen kann, um hohe mechanische Belastungen aufzunehmen und abzuführen, ohne das Risiko einer Beschädigung der weiter innen angeordneten elektrischen oder optischen Leiter. Grundsätzlich kann die Kabelschicht, die mit dem Klebstoff in Verbindung steht, allerdings eine beliebig weit unterhalb des Kalbemantels angeordnete Kabelschicht sein.

Grundsätzlich kann es sich bei der Kabelschicht, die im Rahmen der Erfindung in Verbindung mit dem Klebstoff steht, um eine beliebige Kabelschicht des Kabels handeln, also beispielsweise um ein Dielektrikum bzw. einen Isolator eines elektrischen Kabels, eine Schirmungsfolie oder um einen starren oder elastischen Schutzmantel aus einem Kunstsoff oder einem Metall (z. B. ein Primär- oder Sekundärschutz eines optischen Kabels).

Gemäß einer besonders bevorzugten Weiterbildung der Erfindung kann aber insbesondere vorgesehen sein, dass die besagte Kabelschicht Zugentlastungselemente aufweist, insbesondere Verstärkungsfasern, oder aus Zugentlastungselementen besteht.

Vorzugsweise kann es sich bei den Verstärkungsfasern um Aramidfasern, Kevlarfasern oder um metallische Fasern handeln (z. B. zu einem Kabelschirmgeflecht verwobene, metallische Fasern - insbesondere bei einem elektrischen Kabel).

Grundsätzlich kommen allerdings beliebige Zugentlastungselemente bzw. Verstärkungsfasern in Frage, beispielsweise auch Glasfasern, Kunststofffasern, organische Fasern oder sonstige Fasern.

Insofern Verstärkungsfasern zur Anwendung kommen, können diese vorzugsweise - aber nicht notwendigerweise - miteinander verwoben, verflochten oder auf sonstige Weise verbunden sein, um die mechanischen Eigenschaften noch zu verbessern. Die Verstärkungsfasern sind vorzugsweise entlang der Kabellängsachse um das Kabel herumgewunden. Die Verstärkungsfasern können geordnet, gegebenenfalls aber auch vollständig ungeordnet verlaufen.

Insofern der Kabelmantel entlang der Kabellängsachse vollständig umlaufend unterbrochen ist (beispielsweise also durch den vorstehend bereits erwähnten Teilabzug des Kabelmantels), kann sich bei einem Kabel, das die vorstehend beschriebenen Verstärkungsfasern aufweist, im Rahmen der Montage des Steckverbinders ein weiterer erfindungsgemäßer Vorteil ergeben. Denn dadurch, dass ein Teilstück des Kabelmantels von dem verbleibenden Kabelmantel abgetrennt und in Richtung auf das vordere, freie Kabelende teilweise abgezogen ist, können die freien Enden der Verstärkungsfasern von dem Teilstück des Kabelmantels weiterhin überdeckt sein. Ein Ausfransen der Verstärkungsfasern wird dadurch verhindert, was einen Fügeprozess für das Einfügen des Kabels in das Zugsicherungsbauteil oder in eine sonstige Steckverbinderkomponenten des Steckverbinders vereinfacht.

Gemäß einer Weiterbildung der Erfindung kann vorgesehen sein, dass das Kabel eine oder mehrere unterhalb der besagten Kabelschicht verlaufende elektrische oder optische Leitungen aufweist (insbesondere wenigstens eine Datenleitung, wie beispielsweise einen oder mehrere Lichtwellenleiter).

Bei der mit dem Klebstoff in Kontakt stehenden Kabelschicht handelt es sich somit vorzugsweise nicht um eine optische Leitung oder um einen elektrischen Innenleiter, die vorzugsweise weiter unterhalb der besagten Kabelschicht angeordnet sind. Bei der besagten Kabelschicht kann es sich im Falle eines elektrischen Kabels allerdings um einen elektrischen Außenleiter des elektrischen Kabels handeln, der sich für einen Kabelzugabfang in der Regel gut eignen kann.

In einer Weiterbildung der Erfindung kann vorgesehen sein, dass das Zugsicherungsbauteil auf einem Endabschnitt des Kabels befestigt ist.

Das Zugsicherungsbauteil ist im Rahmen der Erfindung daher vorzugsweise nicht auf einem Mittelabschnitt des Kabels befestigt, sondern einem freien, axialen Kabelende des Kabels zugeordnet sein, insbesondere um das Kabelende bzw. den Endabschnitt des Kabels mit einem Steckverbinder zu verbinden.

Der Endabschnitt des Kabels bzw. dessen axiales Kabelende kann innerhalb des Zugsicherungsbauteils enden oder wieder aus dem Zugsicherungsbauteil austreten. In letzterem Fall ist das Kabel bzw. das entsprechende Kabelende des Kabels vollständig durch das Zugsicherungsbauteil hindurchgeführt, wobei die Öffnungen zum Ein- und Ausführen des Kabels in dem Zugsicherungsbauteil miteinander fluchten oder zueinander versetzt sein können (je nachdem, ob sich die Anordnung zum Zugabfang beispielsweise für einen geradlinigen Steckverbinder oder für einen Winkelsteckverbinder eignen soll).

Es kann vorgesehen sein, dass der Endabschnitt des Kabels zumindest abschnittsweise abisoliert ist, insbesondere angrenzend an das vordere, freie axiale Ende, so dass neben der vorstehend bereits erwähnten und mit dem Klebstoff verbundenen Kabelschicht des Kabels, auch noch weitere Kabelschichten des Kabels (insbesondere elektrische oder optische Leiter) für eine Kontaktierung mit Steckverbinderkomponenten des Steckverbinders zur Verfügung stehen.

Es kann vorzugsweise vorgesehen sein, dass das Kabel bzw. der Endabschnitt des Kabels mit einem hinteren, unbearbeiteten Kabelabschnitt aus einem kabelseitigen Ende des Zugsicherungsbauteils austritt.

Es kann somit insbesondere vorgesehen sein, dass das Kabel bzw. der Endabschnitt des Kabels, auf dem das Zugsicherungsbauteil befestigt ist, ausgehend von dem vorderen, freien Ende ("steckseitiges Ende") drei axiale Abschnitte aufweist:
- einen vorderen, zumindest abschnittsweise abisolierten Kabelabschnitt (der vorzugsweise vollständig von dem Kabelmantel befreit ist);
- einen mittleren Kabelabschnitt, in dem der Kabelmantel des Kabels zur Ausbildung des erfindungsgemäß genannten Hohlraums für den Klebstoff abschnittsweise umfangsseitig entfernt oder entlang der Kabellängsachse vollständig umlaufend unterbrochen ist (der also den Kabelmantel noch teilweise aufweist); und
- einen hinteren, unbearbeiteten Kabelabschnitt (der noch den unbearbeiteten Kabelmantel aufweist), der durch die kabelseitige Öffnung des Zugsicherungsbauteils verläuft.

In einer Weiterbildung der Erfindung kann vorgesehen sein, dass der Kabelmantel zur Ausbildung des Hohlraums innerhalb des Zugsicherungsbauteils zumindest um einen Winkelbereich von 15° umfangsseitig entfernt ist, vorzugsweise um zumindest 30°, weiter bevorzugt um zumindest 45°, noch weiter bevorzugt um zumindest 60°, insbesondere um zumindest 90° oder mehr, beispielsweise 120°, 140°, 160°, 180° oder noch mehr.

Bei den umfangsseitig entfernten Abschnitten des Kabelmantels handelt es sich vorzugsweise um teilringförmige oder fensterförmige Öffnungen in dem Kabelmantel. Vorzugsweise handelt es sich jedoch nicht um einzelne Bohrungen, Kanäle oder Punktierungen des Kabelmantels.

In einer vorteilhaften Weiterbildung der Erfindung kann vorgesehen sein, dass der Kabelmantel zur Ausbildung des Hohlraums innerhalb des Zugsicherungsbauteils zumindest über eine axiale Länge von 0,5 mm vollständig umlaufend unterbrochen ist, vorzugsweise über eine axiale Länge von zumindest 1,0 mm, weiter bevorzugt von zumindest 1,2 mm, beispielsweise über eine axiale Länge von etwa 1,4 mm oder mehr.

Es wird somit vorzugsweise eine Ringnut bzw. ein vollständig ringförmig umlaufender axialer Abstand zwischen dem abgetrennten Teilstück und dem verbliebenen Kabelmantel gebildet. Vorzugsweise ist der dadurch gebildete Hohlraum in Axialrichtung größer als ein einzig durch das ringförmige Schneiden des Kabelmantels durch das Schneidewerkzeug ausgebildeter Schlitz. Der axiale Abstand zwischen dem abgetrennten Teilstück des Kabelmantels und dem verbliebenen Kabelmantel ist daher vorzugsweise größer als die Breite des Schneidewerkzeugs zum ringförmigen Durchtrennen des Kabelmantels.

Es kann vorgesehen sein, dass der Klebstoff
a) eine Grundfläche des Hohlraums bzw. der Vertiefung(en) in dem Kabel / Kabelmantel bzw. eine Außenmantelfläche der Kabelschicht unmittelbar kontaktiert; und/oder
b) eine Stirnseite des Kabelmantels oder eine Seitenfläche der in dem Kabelmantel gebildeten Vertiefung unmittelbar kontaktiert; und/oder
c) eine Innenmantelfläche des Zugsicherungsbauteils unmittelbar kontaktiert; und/oder
d) eine Seitenfläche der nachfolgend noch erwähnten Zugangsöffnung unmittelbar kontaktiert.

In einer Weiterbildung der Erfindung kann vorgesehen sein, dass der Klebstoff den Hohlraum zumindest im Wesentlichen vollständig ausfüllt.

Vorzugsweise kontaktiert der Klebstoff die besagte Kabelschicht außenmantelseitig zumindest im Wesentlichen vollständig. Vorzugsweise kontaktiert der Klebstoff außerdem das Zugsicherungsbauteil im Bereich des Hohlraums innenmantelseitig zumindest im Wesentlichen vollständig. Der Klebstoff muss sich nicht zwingend bis in eine etwaige Zugangsöffnung zum Einbringen des Klebstoffs (nachfolgend noch erwähnt) erstrecken.

In einer vorteilhaften Weiterbildung der Erfindung kann vorgesehen sein, dass der Klebstoff ein lichthärtender Klebstoff ist, insbesondere ein UV-härtender Klebstoff. Alternativ oder zusätzlich kann der Klebstoff auch ein thermisch härtender Klebstoff sein.

Im Rahmen eines teilautomatisierten oder vollautomatisierten Montageverfahrens können sich insbesondere lichthärtende oder thermisch härtende Klebstoffe gut eignen, da die Härtezeit und die Härtedauer in diesem Fall gut kontrollierbar sind. Grundsätzlich kommen im Rahmen der Erfindung jedoch nahezu beliebige Klebstoffe in Frage, wie beispielsweise luftaushärtende bzw. durch Trocknung aushärtende Klebstoffe, durch Abkühlung aushärtende Klebstoffe oder durch Zugabe eines weiteren Stoffes aushärtende Klebstoffe.

Der Fachmann vermag in Abhängigkeit der Größe bzw. des Volumens des Hohlraums, der geometrischen Gestaltung des Hohlraums und den zu erwartenden Zugkräften grundsätzlich einen geeigneten Klebstoff auszuwählen, beispielsweise hinsichtlich Viskosität derart, dass eine gleichmäßige Verteilung in der Klebekammer bzw. in dem Hohlraum ermöglicht wird.

In einer vorteilhaften Weiterbildung der Erfindung kann vorgesehen sein, dass der Klebstoff ein selbsthaftender, primerfreier Klebstoff ist.

Unter einem selbsthaftenden Klebstoff ist im Rahmen der Erfindung ein Klebstoff zu verstehen, der für die erforderliche Anhaftung an der Oberfläche der Kabelschicht und des Zugsicherungsbauteils keinen so genannten "Primer" benötigt (auch "Haftvermittler" genannt). Dadurch kann eine ansonsten gegebenenfalls erforderliche Vorbehandlung der Kabelschicht oder des Zugsicherungsbauteils entfallen. In Sonderfällen (weniger bevorzugt) kann der im Rahmen der Erfindung verwendete Klebstoff allerdings auch ein Klebstoff sein, der einen Primer erfordert.

In einer vorteilhaften Weiterbildung der Erfindung kann vorgesehen sein, dass das Zugsicherungsbauteil wenigstens eine in den Hohlraum mündende Zugangsöffnung zum Einbringen des Klebstoffes aufweist.

Die Zugangsöffnung kann lediglich zum Einbringen des Klebstoffes dienen und nach dem Einbringen des Klebstoffes selbst nicht von dem Klebstoff ausgefüllt sein. Vorzugsweise erstreckt sich der Klebstoff nach dem Einbringen allerdings zumindest teilweise auch bis in die Zugangsöffnung - gegebenenfalls kann der Klebstoff die Zugangsöffnung sogar vollständig ausfüllen.

Optional kann die Zugangsöffnung verschließbar sein und ein Verschlusselement aufweisen, was in der Regel allerdings nicht erforderlich ist, da der Zugang durch den Klebstoff selbst ausreichend versiegelt sein kann.

Grundsätzlich kann eine beliebige Anzahl Zugangsöffnungen zum Einbringen des Klebstoffs vorgesehen sein, wobei in der Regel bereits eine Zugangsöffnung ausreichen kann.

Auf eine Zugangsöffnung kann gegebenenfalls aber auch vollständig verzichtet werden, beispielsweise wenn der Klebstoff bereits zuvor durch eine für das Kabel vorgesehene Einführöffnung in das Zugsicherungsbauteil eingebracht und/oder auf die vom Kabelmantel entfernten Bereiche des Kabels aufgetragen wurde, bevor das Kabel in das Zugsicherungsbauteil eingefügt wird (weniger bevorzugt). Auch wenn das Zugsicherungsbauteil ein mehrteiliges Bauteil ist, das beispielsweise eine erste Gehäuseschale und eine mit der ersten Gehäuseschale zusammenfügbare, zweite Gehäuseschale aufweist, kann eine Zugangsöffnung zum Einbringen des Klebstoffes gegebenenfalls entfallen, da der Klebstoff dann vorteilhaft im noch geöffneten Zustand der beiden Gehäuseschalen aufgetragen werden kann.

In einer Weiterbildung der Erfindung kann vorgesehen sein, dass das Zugsicherungsbauteil auf mehreren Kabeln gemeinsam befestigt ist, die in einer gemeinsamen Kabelaufnahme oder in jeweiligen Kabelaufnahmen angeordnet sind.

Die Anordnung zum Zugabfang kann beispielsweise genau eines, zwei, drei, vier, fünf, sechs oder noch mehr Kabel aufweisen, die jeweils oder gemeinsam auf die beschriebene Weise mechanisch durch den Klebstoff fixiert sind.

Es kann beispielsweise vorgesehen sein, dass das Zugsicherungsbauteil eine oder mehrere kabelseitige Öffnungen zur Zuführung der mehreren Kabel aufweist, wobei jede Öffnung in einer Kammer oder Durchführung für das oder die Kabel endet. Wenn jede der Kammern oder Durchführungen nur einem Kabel zugeordnet ist, kann in jeder Kammer ein jeweiliger Hohlraum zwischen der Innenseite des Zugsicherungsbauteils und der jeweiligen, teilweise freigelegten Kabelschicht des Kabels gebildet sein. Vorzugsweise sind im Falle mehrere Kammern bzw. Durchführungen die Kammern bzw. Durchführungen zumindest derart miteinander verbunden (z. B. durch Kanäle oder Öffnungen in Zwischenwandungen), dass es ausreichend ist, den Klebstoff durch eine gemeinsame Zugangsöffnung einzubringen, um den Montageaufwand zu verringern.

Gemäß einer Weiterbildung der Erfindung kann vorgesehen sein, dass das Zugsicherungsbauteil ein Steckverbindergehäuse eines Steckverbinders oder eine in einem Steckverbindergehäuse eines Steckverbinders befestigbare Steckverbinderkomponente ist.

Das Zugsicherungsbauteil kann also beispielsweise Teil eines ein- oder mehrteiligen Steckverbindergehäuses sein. Das Zugsicherungsbauteil kann allerdings grundsätzlich auch nur eine Steckverbinderkomponente des Steckverbinders sein, die in dem Steckverbindergehäuse separat befestigbar ist. Das Zugsicherungsbauteil kann in dem Steckverbindergehäuse hierfür grundsätzlich auf beliebige Weise befestigbar sein, beispielsweise stoffschlüssig, kraftschlüssig und/oder formschlüssig. Das Zugsicherungsbauteil kann in dem Steckverbindergehäuse insbesondere durch eine gegenseitige Verrastung formschlüssig fixiert sein. Hierfür kann beispielsweise vorgesehen sein, dass einer oder mehrere elastische Rastarme oder Rasthaken des Steckverbindergehäuses in korrespondierende Vertiefung oder Rücksprünge des Zugsicherungsbauteils eingreifen - oder umgekehrt.

Gemäß einer Weiterbildung der Erfindung kann vorgesehen sein, dass der Kabelmantel des Kabels und/oder die Innenseite bzw. Innenmantelfläche des Zugsicherungsbauteils wenigstens eine abschnittsweise umfangsseitig oder vollständig umfangsseitig umlaufende Vertiefung aufweist, um wenigstens einen weiteren Hohlraum zwischen dem Kabelmantel des Kabels und der Innenseite des Zugsicherungsbauteils auszubilden.

Auf diese Weise kann die Haltekraft zwischen dem Kabel und dem Zugsicherungsbauteil weiter erhöht werden.

Der weitere Hohlraum kann vorzugsweise von dem Hohlraum beabstandet sein (insbesondere in Kabellängsachsrichtung) oder den Hohlraum erweitern (also in den Hohlraum unmittelbar übergehen).

Die Erfindung betrifft auch eine Steckverbinderanordnung, aufweisend einen Steckverbinder und eine oder mehrere Anordnungen zum Zugabfang eines Kabels gemäß den vorstehenden und nachfolgenden Ausführungen.

Auf vorteilhafte Weise kann eine Steckverbinderanordnung mit einer Anordnung zum Zugabfang eines Kabels bereitgestellt werden, die sich für besonders hohe mechanische Zug- und Querkräfte eignen kann, ohne das Risiko einer mechanischen Beschädigung von elektrischen und/oder optischen Leitungen des Kabels. Die Steckverbinderanordnung kann ausgebildet sein, Kabelzugkräfte von zumindest 50 N, vorzugsweise zumindest 100 N oder mehr, aufzunehmen.

Im Rahmen der Erfindung kann gegebenenfalls eine vollständig metallfreie optische Steckverbinderanordnung bereitgestellt werden, da auf die herkömmliche Crimptechnik und damit etwaige metallische Crimphülsen, verzichtet werden kann. Ein vollständig metallfreies Design kann kostentechnisch, gewichtstechnisch und mitunter auch anwendungsbedingt vorteilhaft sein (z. B. für medizinische Anwendungen zur Verwendung in einem MRT).

Bei dem Steckverbinder kann es sich vorzugsweise um einen optischen Steckverbinder handeln. Der Steckverbinder kann allerdings auch ein elektrischer Steckverbinder oder ein hybrider Steckverbinder sein, der optische und elektrische Komponenten aufweist.

Vorzugsweise weist der Steckverbinder ein Steckverbindergehäuse auf, das ein- oder mehrteilig ausgebildet sein kann, beispielsweise aus einem Kunststoff und/oder aus einem Metall. Wie vorstehend bereits erwähnt, kann das Zugsicherungsbauteil eine von dem Steckverbindergehäuse separate Steckverbinderkomponente oder einstückig bzw. monolithisch mit dem Steckverbindergehäuse ausgebildet sein.

Wie vorstehend ebenfalls bereits erwähnt, eignet sich die Erfindung grundsätzlich zur Verwendung mit Steckverbindern beliebiger Bauweise. Beispielsweise können gerade Steckverbinder oder Winkelsteckverbinder im Rahmen der Erfindung in Frage kommen. Der Steckverbinder kann beliebige Steckverbinderkomponenten und Funktionsbereiche aufweisen, wie beispielsweise eine steckseitige Steckschnittstelle ("Interface") zur Verbindung mit einem korrespondierenden Gegensteckverbinder, die eine Verbindung zwischen elektrischen und/oder optischen Kontaktelementen des Steckverbinders mit korrespondierenden elektrischen und/oder optischen Gegenkontaktelementen des Gegensteckverbinders und/oder mechanische Rast- und Verbindungsmittel (beispielsweise Rasthaken und/oder Rastwippen) zur mechanischen Verrastung bzw. Verbindung mit einem Gegensteckverbindergehäuse des Gegensteckverbinders aufweist.

Das Steckverbindergehäuse kann im Bereich einer Einführöffnung für das wenigstens eine Kabel oder die Anordnung zum Zugabfang optional eines oder mehrere Dichtungselemente aufweisen, um das Innere des Steckverbinders gegen Flüssigkeiten, Staub oder sonstige Verschmutzungen abzudichten. Insbesondere wenn das Zugsicherungsbauteil einstückig bzw. monolithisch mit dem Steckverbindergehäuse ausgebildet ist bzw. dem Steckverbindergehäuse entspricht, kann die Kabeldichtung im Bereich des besagten Hohlraums gegebenenfalls auch bereits durch besagten Klebstoff ausgebildet sein.

Der Steckverbinder kann eines oder mehrere Kontaktelemente zur Verbindung mit korrespondierenden Gegenkontaktelementen des Gegensteckverbinders aufweisen. Bei einem Kontaktelement kann es sich beispielsweise um ein elektrisches Kontaktelement handeln (z. B. um einen Stiftkontakt, um einen Flachkontakt, um ein Kontaktfederelement, um eine Buchse oder um ein elektrisches Kontaktelement sonstiger Bauart). Bei dem Kontaktelement kann es sich im Falle eines optischen Steckverbinders vorzugsweise um eine optische Ferrule handeln. Das elektrische oder optische Kontaktelement kann in Steckrichtung optional gefedert gelagert sein.

Die Erfindung betrifft auch ein Verfahren zur Montage eines Kabels in einem Steckverbinder, aufweisend zumindest die folgenden Verfahrensschritte:
- Bereitstellen eines Kabels, insbesondere eines optischen Kabels;
- Bereitstellen eines Zugsicherungsbauteils des Steckverbinders;
- Abschnittsweise umfangsseitiges Entfernen eines Kabelmantels des Kabels oder umfangsseitig vollständiges Abtrennen und Durchführen eines Teilabzugs des Kabelmantels;
- Einbringen eines Kabelabschnittes des Kabels (dessen Kabelmantel bereits wie vorstehend beschrieben bearbeitet wurde oder anschließend noch wie vorstehend beschrieben bearbeitet wird) in das Zugsicherungsbauteil;
- Einbringen eines Klebstoffes in einen Hohlraum zwischen einer Innenseite des Zugsicherungsbauteils und einer unterhalb des Kabelmantels verlaufenden Kabelschicht des Kabels (die in dem vorstehend genannten Kabelabschnitt teilweise freigelegt wurde), um das Zugsicherungsbauteil auf dem Kabel zu befestigen.

An dieser Stelle sei betont, dass die vorstehend und nachfolgend genannten Verfahrensschritte nicht unbedingt in der Reihenfolge durchgeführt werden müssen, in der sie in der Beschreibung oder in den Patentansprüchen erstmals beschrieben oder erwähnt sind. Es können daher beispielsweise einzelne Verfahrensschritte oder Gruppen von Verfahrensschritten untereinander austauschbar sein, wenn dies technisch nicht ausgeschlossen ist. Auch können Verfahrensschritte miteinander kombiniert, in separate Zwischenschritte aufgeteilt oder mit Zwischenschritten ergänzt werden. Das Verfahren ist mit den beschriebenen Verfahrensschritten auch nicht unbedingt abschließend beschrieben und kann mit weiteren, auch nicht genannten Verfahrensschritten, ergänzt werden.

Auf vorteilhafte Weise kann eine Kabelzugentlastung in Klebetechnik mit besonders starker Haltekraft für einen Kabelsteckverbinder bereitgestellt werden.

Insbesondere wenn es sich bei besagter Kabelschicht um eine Kabelschicht handelt, die Verstärkungsfasern aufweist, und wenn zur Freilegung der Kabelschicht in dem mittleren Kabelabschnitt des Kabels ein Teilabzug des Kabelmantels zur Anwendung kommt, kann der vorgeschlagene Montageprozess gegenüber dem Stand der Technik weiter verbessert sein, da in diesem Fall ein "Einfädeln" bzw. das Einbringen des vorbearbeiteten Kabels in das Zugsicherungsbauteil vereinfacht sein kann, da sichergestellt ist, dass die Verstärkungsfasern im vorderen, bereits teilweise abisolierten Kabelabschnitt des Kabels weiterhin unterhalb des Teilstücks des Kabelmantels gehalten werden und nicht etwa ungeordnet von dem Außenmantel der Kabelschicht abstehen bzw. ausgefranst sind.

Im Rahmen des vorstehend beschriebenen Verfahrens kann optional vorgesehen sein, dass ein vorderer Kabelabschnitt des Kabels zumindest abschnittsweise abisoliert wird, beispielsweise um einen elektrischen Innenleiter und/oder einen optischen Lichtwellenleiter für eine Verbindung mit einer entsprechenden Steckverbinderkomponente bzw. einem Kontaktelement des Steckverbinders zugänglich zu machen. Ferner kann die Montage eines elektrischen oder optischen Kontaktelementes (z. B. einer optischen Ferrule) auf dem freigelegten elektrischen oder optischen Leiter in einem weiteren Verfahrensschritt vorgesehen sein.

Die Erfindung betrifft außerdem auch eine Vorrichtung zur Montage eines Kabels in einem Steckverbinder, vorzugsweise eingerichtet zur Durchführung des vorstehend genannten Verfahrens, aufweisend
- eine Einrichtung zur Kabelmantelbearbeitung, zum abschnittsweise umfangsseitigen Entfernen eines Kabelmantels des Kabels oder zur Durchführung eines Teilabzugs des Kabelmantels, insbesondere im Rahmen eines Abisoliervorgangs;
- eine Zustell- und Bestückungseinrichtung, um einen Abschnitt des Kabels (insbesondere einen Endabschnitt) in ein Zugsicherungsbauteil des Steckverbinders einzubringen, insbesondere entlang der Kabellängsachse des Kabels; und
- eine Einrichtung zur Zuführung eines Klebstoffes in das Zugsicherungsbauteil.

Die Vorrichtung und/oder die genannten Einrichtungen weist bzw. weisen vorzugsweise eine Steuereinrichtung auf, die zur Durchführung der einzelnen Verfahrensschritte bzw. zur Steuerung und Überwachung der vorstehend genannten Arbeitsschritte eingerichtet ist. Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Merkmale, die im Zusammenhang mit einem der Gegenstände der Erfindung, namentlich gegeben durch die erfindungsgemäße Anordnung zum Zugabfang des Kabels, die erfindungsgemäße Steckverbinderanordnung, das erfindungsgemäße Verfahren oder die erfindungsgemäße Vorrichtung, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: einen Endabschnitt eines optischen Kabels, der in einem vorderen Kabelabschnitt teilweise abisoliert ist, zur anschließenden Verwendung mit einer erfindungsgemäßen Anordnung, in einer seitlichen Schnittdarstellung;
- Figur 2: den Endabschnitt des optischen Kabels gemäß Figur 1, nach dem Durchführen eines Teilabzugs des Kabelmantels in einem mittleren Kabelabschnitt;
- Figur 3: eine erfindungsgemäße Anordnung aus dem optischen Kabel gemäß Figur 2 und einem das Kabel aufnehmenden Zugsicherungsbauteil, mit Hohlräumen zwischen einer Innenseite des Zugsicherungsbauteils und einer abschnittsweise freigelegten Kabelschicht des Kabels unterhalb des Kabelmantels;
- Figur 4: die Anordnung gemäß Figur 3, nach dem Einbringen eines Klebstoffes in den Hohlraum;
- Figur 5: die Anordnung gemäß Figur 4 in einer perspektivischen Darstellung;
- Figur 6: eine erfindungsgemäße Steckverbinderanordnung aus einem optischen Steckverbinder und einer in dem Steckverbindergehäuse befestigten Anordnung gemäß Figur 4; und
- Figur 7: eine erfindungsgemäße Steckverbinderanordnung gemäß einem weiteren Ausführungsbeispiel, aus einem optischen Steckverbinder, dessen Steckverbindergehäuse außerdem das Zugsicherungsbauteil ausbildet.

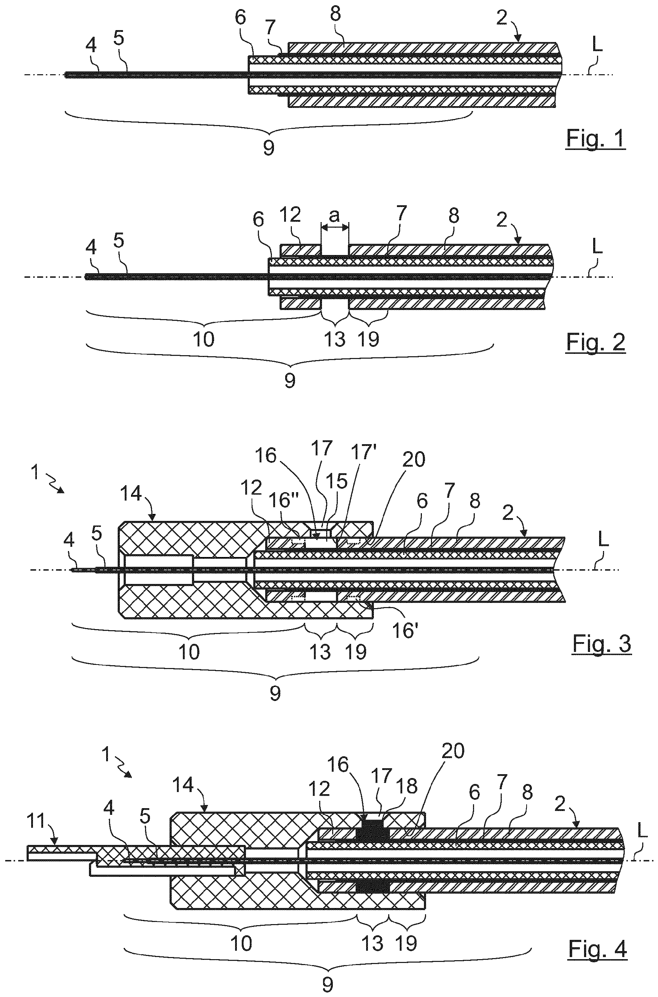

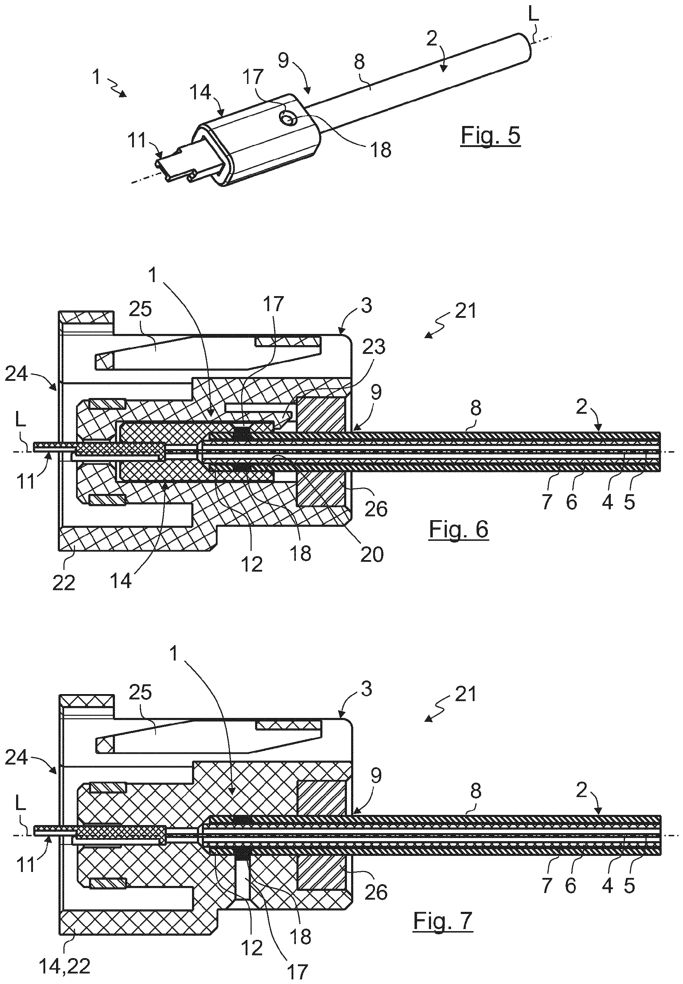

Die Figuren 1 bis 5 zeigen eine erfindungsgemäße Anordnung 1 zum Zugabfang eines Kabels 2 in verschiedenen Montagezuständen. Der vollständig montierte Zustand der Anordnung 1 ist in Figur 4 in einer Schnittdarstellung und in Figur 5 in einer perspektivischen Ansicht gezeigt.

Bei den in den Figuren dargestellten Kabeln 2 handelt es sich beispielhaft jeweils um optische Kabel 2 und bei den dargestellten, später noch beschriebenen Steckverbindern 3 somit um optische Steckverbinder 3. Grundsätzlich kann sich die Erfindung allerdings auch für die Verwendung mit elektrischen Kabeln bzw. elektrischen Steckverbindern vorteilhaft eignen. Auch hybride Kabel bzw. hybride Steckverbinder können vorgesehen sein. Die nachstehend beschriebenen Ausführungsbeispiele sollen die Erfindung daher nur beispielhaft für die optische Verbindertechnik beschreiben.

Das unter anderem in Figur 1 dargestellte optische Kabel 2 weist einen Lichtwellenleiter 4 auf (beispielsweise eine Glasfaser), die von einem sogenannten Primärschutz 5 bzw. einer Primärbeschichtung ummantelt ist. Das in den Figuren dargestellte optische Kabel 2 weist beispielhaft lediglich einen einzigen Lichtwellenleiter 4 auf; grundsätzlich kann ein Kabel 2 im Rahmen der Erfindung allerdings eine beliebige Anzahl Lichtwellenleiter 4 bzw. Datenleitungen und/oder elektrische Versorgungsleitungen aufweisen. Der Lichtwellenleiter 4 verläuft innerhalb eines hülsenförmigen Sekundärschutzes 6 ("Tube"), der von einer Verstärkungsfasern aufweisenden Kabelschicht 7 umhüllt ist. Bei den nicht näher dargestellten Verstärkungsfasern kann es sich beispielsweise um Aramidfasern oder Kevlarfasern handeln. Unmittelbar oberhalb bzw. außerhalb der die Verstärkungsfasern aufweisenden Kabelschicht 7 verläuft ein Außenmantel bzw. Kabelmantel 8 des Kabels 2. Der dargestellte und beschriebene Kabelaufbau ist lediglich beispielhaft zu verstehen.

Figur 1 zeigt das optische Kabel 2 in einem bereits teilweise bearbeiteten Zustand. Der gezeigte Endabschnitt 9 des Kabels 2 ist zur Montage in einem korrespondierenden Steckverbinder 3 vorgesehen, der nachfolgend noch mit Bezugnahme auf Figur 6 beschrieben wird. Der Endabschnitt 9 weist den in Figur 1 dargestellten, vorderen Kabelabschnitt 10 auf, der abschnittsweise abisoliert ist, um die Verbindung des Lichtwellenleiters 4 mit einer optischen Ferrule 11 (vgl. u. a. Figuren 4 und 5) vorzubereiten. Hierzu ist der Kabelmantel 8 des Kabels 2 an einer vordefinierten axialen Position abgetrennt bzw. derart abisoliert, dass die unter dem Kabelmantel 8 verlaufenden Schichten des Kabels 2 zugänglich werden. Die unmittelbar unter dem Kabelmantel 8 verlaufende Kabelschicht 7 mit den bereits genannten Verstärkungsfasern ist an einer weiter vorne angeordneten axialen Position ebenfalls gekürzt, so dass sie aus dem axialen Ende des Kabelmantels 8 herausragt. Ferner wurde der Sekundärschutz 6 bzw. die "Tube" in einem noch weiter vorne angeordneten Abschnitt entfernt, so dass der Lichtwellenleiter 4 nebst Primärschutz 5 bzw. Primärbeschichtung ausreichend weit zur Weiterverarbeitung und Verbindung mit der Ferrule 11 freigelegt ist.

In einem weiteren Montageschritt bzw. in einem weiteren Schritt zur Vorbearbeitung des Kabels 2 kann ein sogenannter Teilabzug des Kabelmantels 8 durchgeführt werden, wie in Figur 2 dargestellt. Das heißt, ein vorderes Teilstück 12 des Kabelmantels 8 wurde an einer von dem axialen Ende des Kabelmantels 8 beabstandeten Position ringförmig von dem verbleibenden Kabelmantel 8 abgetrennt und in Richtung auf das vordere, freie Ende des Kabels 2 teilweise abgezogen. Das Teilstück 12 wurde im Ausführungsbeispiel derart abgezogen, dass die freigelegten Verstärkungsfasern der unmittelbar unterhalb dem Kabelmantel 8 befindlichen Kabelschicht 7 unterhalb des Teilstücks 12 enden, so dass ein Ausfransen der Verstärkungsfasern verhindert wird, was die weitere Montage erheblich vereinfachen kann. Der Kabelmantel 8 ist somit in einen mittleren Kabelabschnitt 13 des dargestellten Endabschnittes 9 des Kabels 2 durch den durchgeführten Teilabzug über eine definierte axiale Länge a (vgl. Figur 2) vollständig umlaufend unterbrochen.

An dieser Stelle sei erwähnt, dass alternativ oder zusätzlich zur Durchführung eines Teilabzugs auch vorgesehen sein kann, den Kabelmantel 8 des Kabels 2 in dem mittleren Kabelabschnitt 13 nur abschnittsweise umfangsseitig zu entfernen. Es können also alternativ oder zusätzlich beispielsweise teilringförmige oder fensterförmige Ausnehmungen in den Kabelmantel 8 eingebracht werden (nicht dargestellt). Der Kabelmantel 8 kann hierfür beispielsweise um einen Winkelbereich von zumindest 30° umfangsseitig entfernt sein.

In Figur 3 ist das in Figur 2 dargestellte, vorbearbeitete optische Kabel 2 in einem Zugsicherungsbauteil 14 der Anordnung 1 eingefügt. Zuvor oder auch nach dem Einfügen wurde außerdem noch der Primärschutz 5 bzw. die Primärbeschichtung des Lichtwellenleiters 4 entfernt ("Cleaven"), so dass der Lichtwellenleiter 4 zur Weiterverbindung mit der in Figur 4 dargestellten optischen Ferrule 11 ausreichend freiliegt. In Figur 4 ist der Lichtwellenleiter 4 bereits in seinem in der Ferrule montierten Zustand gezeigt. Figur 5 zeigt die erfindungsgemäße Anordnung 1 außerdem noch in einer perspektivischen Darstellung.

Wie in Figur 3 gut erkennbar ist, wird aufgrund des Teilabzugs bzw. des entlang der Kabellängsachse L umlaufend unterbrochenen Kabelmantels 8 in dem mittleren Kabelabschnitt 13 des optischen Kabels 2 und einer Innenseite 15 des Zugsicherungsbauteils 14 ein Hohlraum 16 gebildet.

Das Zugsicherungsbauteil 14 weist eine in den Hohlraum 16 mündende Zugangsöffnung 17 auf. Durch diese Zugangsöffnung 17 kann in einem nachfolgenden Verfahrensschritt ein Klebstoff 18 in den Hohlraum 16 eingebracht werden, um das Zugsicherungsbauteil 14 stoffschlüssig auf dem Kabel 2 zu befestigen (vgl. Figur 4). Es kann vorgesehen sein, dass eine Erstreckung der Zugangsöffnung 17 in Kabellängsachsrichtung, insbesondere ein Durchmesser der Zugangsöffnung 17, kleiner ist als eine Erstreckung des Hohlraums 16 in Kabellängsachsrichtung, so dass ein Rücksprung bzw. eine Kante 17' (vgl. Figur 3) am Übergang zwischen der Zugangsöffnung 17 und dem Hohlraum 16 gebildet wird. Auf diese Weise kann ein zusätzlicher Formschluss geschaffen werden, nachdem der Klebstoff 18 eingebracht wurde und ausgehärtet ist. Eine Kante 17' zwischen dem Hohlraum 16 und der Zugangsöffnung 17 ist allerdings nicht unbedingt erforderlich, weshalb die besagten Erstreckungen in Kabellängsachsrichtung auch identisch sein können. Gegebenenfalls kann die Zugangsöffnung 17 auch eine größere Erstreckung in Kabellängsachsrichtung aufweisen als der Hohlraum 16 (weniger bevorzugt).

Der Klebstoff 18 füllt den Hohlraum 16 vorzugsweise zumindest im Wesentlichen vollständig aus. Aufgrund des durch den Teilabzug des Kabelmantels 8 geschaffenen Hohlraumes 16 wird für die Klebeverbindung eine vergrößerte Klebefläche bereitgestellt, was die Haltekraft des Zugsicherungsbauteils 14 auf dem optischen Kabel 2 verbessert. Ferner kann durch das Hintergreifen der gebildeten Kanten des Kabelmantels 8 eine weiter verbesserte Fixierung durch einen zusätzlichen Formschluss bereitgestellt werden, insbesondere wenn der Kabelmantel 8 abschnittsweise umfangsseitig entfernt wurde.

Als Klebstoff 18 können insbesondere Klebstoffe 18 in Frage kommen, die selbsthaftend sind, für die also vorzugsweise kein Primer erforderlich ist. Der Klebstoff 18 kann vorzugsweise ein lichthärtender, insbesondere UV-härtender, oder ein thermisch härtender Klebstoff 18 sein.

Optional kann vorgesehen sein, dass zusätzlich zu dem bereits beschriebenen Hohlraum 16 zwischen der Kabelschicht 7 und der Innenseite 15 des Zugsicherungsbauteils 14 einer oder mehrere weitere Hohlräume 16', 16" zwischen dem Kabelmantel 8 des Kabels 2 und der Innenseite 15 des Zugsicherungsbauteils 14 geschaffen werden. Hierfür kann der Kabelmantel 8 in lateraler bzw. radialer Richtung teilweise abgetragen sein bzw. eine Vertiefung aufweisen (abschnittsweise umfangsseitig oder vollständig umlaufend), beispielsweise durch eine vorherige abrasive Bearbeitung. Ein entsprechender umlaufender zusätzlicher Hohlraum 16', der in Kabellängsachsrichtung von dem Hohlraum 16 beabstandet ist, ist in Figur 3 strichliniert angedeutet (beispielhaft rechts bzw. kabelseitig neben dem Hohlraum 16). Beispielhaft ist in Figur 3 außerdem noch ein weiterer Hohlraum 16" strichliniert gezeigt, der unmittelbar in den Hohlraum 16 übergeht und den Hohlraum 16 daher erweitert (beispielhaft links bzw. steckerseitig neben dem Hohlraum 16). Alternativ oder zusätzlich kann ein zusätzlicher Hohlraum 16', 16" auch durch eine Vertiefung in dem Zugsicherungsbauteil 14 gebildet werden (nicht dargestellt). Der oder die zusätzlichen Hohlräume 16', 16" können durch eine separate Zugangsöffnung oder durch eine Verbindung (z. B. einen Kanal oder eine sonstige Öffnung) mit der bereits beschriebenen Zugangsöffnung 17 mit dem Klebstoff 18 befüllt werden. Wenn der Hohlraum 16" den Hohlraum 16 erweitert bzw. unmittelbar in den Hohlraum 16 übergeht, kann eine separate Zugangsöffnung oder eine separate Verbindung gegebenenfalls entfallen. Durch die zusätzlichen Hohlräume 16', 16" kann die Haltekraft zwischen Kabel 2 und Zugsicherungsbauteil 14 weiter erhöht werden.

Wie beispielsweise aus den Figuren 3 und 4 ersichtlich, ist ein hinterer Kabelabschnitt 19 des auf dem Zugsicherungsbauteil 14 befestigten Endabschnitts 9 des Kabels unbearbeitet bzw. weist den Kabelmantel 8 noch vollständig auf und ist durch eine kabelseitige Öffnung 20 des Zugsicherungsbauteils 14 hindurchgeführt, vorzugsweise zumindest im Wesentlichen passgenau.

An dieser Stelle sei erwähnt, dass das Zugsicherungsbauteil 14 grundsätzlich auch auf mehreren Kabeln 2 gemeinsam befestigt sein kann. In den Ausführungsbeispielen ist rein beispielhaft jeweils nur ein einziges Kabel 2 dargestellt. Dies soll allerdings nicht einschränkend verstanden werden.

Figur 6 zeigt eine erfindungsgemäße Steckverbinderanordnung 21 aus einem optischen Steckverbinder 3 und der in einem Steckverbindergehäuse 22 des Steckverbinders 3 befestigten Anordnung 1 der Figuren 4 und 5. Die vorstehend beschriebene Anordnung 1 zum Zugabfang ist hierfür beispielhaft in dem Steckverbindergehäuse 22 verrastet. Hierfür weist das Steckverbindergehäuse 22 einen elastischen Rastarm 23 auf, der die hintere Kante des Zugsicherungsbauteils 14 hintergreift. Grundsätzlich sind allerdings beliebige Befestigungstechniken möglich (gegebenenfalls also auch eine kraftschlüssige und/oder stoffschlüssige Befestigung).

Das Steckverbindergehäuse 22 weist eine mechanische und optische Schnittstelle 24 zur Verbindung mit einem korrespondierenden Gegensteckverbinder auf (nicht dargestellt). Zur Verrastung der Steckverbindung ist beispielhaft eine Rastwippe 25 dargestellt.

Im Einführbereich für das Kabel 2 weist der Steckverbinder 3 beispielhaft ein grundsätzlich optionales Dichtungselement 26 auf.

Wie bereits erwähnt, ist der dargestellte Steckverbinder 3 lediglich beispielhaft zu verstehen. Die Erfindung eignet sich grundsätzlich zur Verwendung mit beliebigen Steckverbindern 3. Es kann im Rahmen einer erfindungsgemäßen Steckverbinderanordnung 21 außerdem auch vorgesehen sein, dass mehrere Zugsicherungsbauteile 14 für jeweils eines oder mehrere Kabel 2 gemeinsam in dem Steckverbindergehäuse 22 aufgenommen und befestigt sind.

In Figur 7 ist ein zweites Ausführungsbeispiel einer erfindungsgemäßen Steckverbinderanordnung 21 gezeigt. Im Gegensatz zu dem Ausführungsbeispiel der Figur 6 bildet das Steckverbindergehäuse 22 in Figur 7 das Zugsicherungsbauteil 14 aus bzw. bei dem Steckverbindergehäuse 22 handelt es sich gleichzeitig um das Zugsicherungsbauteil 14. Eine separate Verrastung, wie in Figur 6, ist daher nicht erforderlich. Entsprechend ist die Zugangsöffnung 17 zum Einbringen des Klebstoffs 18 vollständig durch das Steckverbindergehäuse 22 hinausgeführt, um den Klebstoff 18 auf vorteilhafte Weise von außen zuzuführen. Im Gegensatz dazu ist es bei dem Ausführungsbeispiel in Figur 6 in der Regel nicht erforderlich, dass die Zugangsöffnung 17 im montierten Zustand des Zugsicherungsbauteils 14 von außerhalb des Steckverbindergehäuses 22 zugänglich bleibt.

An dieser Stelle sei erwähnt, dass das Steckverbindergehäuse 22 und/oder das Zugsicherungsbauteil 14 als Alternative zu einem Zuführen des Klebstoffes 18 durch eine Zugangsöffnung 17 auch mehrteilig ausgebildet sein kann, so dass der Klebstoff 18 im noch unmontierten Zustand der jeweiligen Gehäusehälften eingebracht werden kann.

Auch in dem Ausführungsbeispiel der Figur 7 ist beispielhaft ein Dichtungselement 26 in dem Steckverbinder 3 vorgesehen. Insbesondere im Falle eines als Steckverbindergehäuse 22 ausgebildeten Zugsicherungsbauteils 14 kann das optionale Dichtungselement 26 gegebenenfalls aber auch durch den Klebstoff 18 selbst ausgebildet werden.

## Patentansprüche

1. Anordnung (1) zum Zugabfang eines Kabels (2), insbesondere eines optischen Kabels (2), aufweisend das Kabel (2) und ein auf dem Kabel (2) mittels eines Klebstoffes (18) befestigtes Zugsicherungsbauteil (14),
**dadurch gekennzeichnet , dass**
ein Kabelmantel (8) des Kabels (2) innerhalb des Zugsicherungsbauteils (14) abschnittsweise umfangsseitig entfernt oder entlang einer Kabellängsachse (L) vollständig umlaufend unterbrochen ist, so dass ein Hohlraum (16) zwischen einer Innenseite (15) des Zugsicherungsbauteils (14) und einer unterhalb des Kabelmantels (8) verlaufenden Kabelschicht (7) des Kabels (2) gebildet ist, in den der Klebstoff (18) eingebracht ist.

2. Anordnung (1) nach Anspruch 1,
**dadurch gekennzeichnet , dass**
die besagte Kabelschicht (7) Verstärkungsfasern aufweist, insbesondere Aramidfasern, Kevlarfasern oder ein metallisches Kabelschirmgeflecht.

3. Anordnung (1) nach Anspruch 1 oder 2,
**dadurch gekennzeichnet , dass**
das Kabel (2) eine oder mehrere unterhalb der besagten Kabelschicht (7) verlaufende Datenleitungen aufweist, insbesondere einen oder mehrere Lichtwellenleiter (4).

4. Anordnung (1) nach einem der Ansprüche 1 bis 3,
**dadurch gekennzeichnet , dass**
das Zugsicherungsbauteil (14) auf einem Endabschnitt (9) des Kabels (2) befestigt ist, wobei der Endabschnitt (9) des Kabels (2) zumindest abschnittsweise abisoliert ist und mit einem unbearbeiteten, hinteren Kabelabschnitt (19) aus einer kabelseitigen Öffnung (20) des Zugsicherungsbauteils (14) austritt.

5. Anordnung (1) nach einem der Ansprüche 1 bis 4,
**dadurch gekennzeichnet , dass**
der Kabelmantel (8) zur Ausbildung des Hohlraums (16) innerhalb des Zugsicherungsbauteils (14) zumindest um einen Winkelbereich von 30°, vorzugsweise zumindest 45°, weiter bevorzugt zumindest 60°, insbesondere zumindest 90°, umfangsseitig entfernt ist.

6. Anordnung (1) nach einem der Ansprüche 1 bis 5,
**dadurch gekennzeichnet , dass**
der Kabelmantel (8) zur Ausbildung des Hohlraums (16) innerhalb des Zugsicherungsbauteils (14) zumindest über eine axiale Länge (a) von 1,0 mm vollständig umlaufend unterbrochen ist, vorzugsweise über eine axiale Länge (a) von zumindest 1,2 mm, beispielsweise über eine axiale Länge (a) von etwa 1,4 mm.

7. Anordnung (1) nach einem der Ansprüche 1 bis 6,
**dadurch gekennzeichnet , dass**
der Klebstoff (18) den Hohlraum (16) zumindest im Wesentlichen vollständig ausfüllt.

8. Anordnung (1) nach einem der Ansprüche 1 bis 7,
**dadurch gekennzeichnet , dass**
der Klebstoff (18) ein lichthärtender, insbesondere UV-härtender, oder ein thermisch härtender Klebstoff (18) ist.

9. Anordnung (1) nach einem der Ansprüche 1 bis 8,
**dadurch gekennzeichnet , dass**
der Klebstoff (18) ein selbsthaftender, primerfreier Klebstoff (18) ist.

10. Anordnung (1) nach einem der Ansprüche 1 bis 9,
**dadurch gekennzeichnet , dass**
das Zugsicherungsbauteil (14) wenigstens eine in den Hohlraum (16) mündende Zugangsöffnung (17) zum Einbringen des Klebstoffes (18) aufweist.

11. Anordnung (1) nach einem der Ansprüche 1 bis 10,
**dadurch gekennzeichnet , dass**
das Zugsicherungsbauteil (14) auf mehreren Kabeln (2) gemeinsam befestigt ist, die in einer gemeinsamen Kabelaufnahme oder in jeweiligen Kabelaufnahmen angeordnet sind.

12. Anordnung (1) nach einem der Ansprüche 1 bis 11,
**dadurch gekennzeichnet , dass**
das Zugsicherungsbauteil (14) ein Steckverbindergehäuse (22) eines Steckverbinders (3) oder eine in einem Steckverbindergehäuse (22) eines Steckverbinders (3) befestigbare Steckverbinderkomponente ist.

13. Anordnung (1) nach einem der Ansprüche 1 bis 12,
**dadurch gekennzeichnet , dass**
der Kabelmantel (8) des Kabels (2) und/oder die Innenseite (15) des Zugsicherungsbauteils (14) wenigstens eine abschnittsweise umfangsseitig oder vollständig umfangsseitig umlaufende Vertiefung aufweist, um wenigstens einen weiteren Hohlraum (16', 16") zwischen dem Kabelmantel (8) des Kabels (2) und der Innenseite (15) des Zugsicherungsbauteils (14) auszubilden, wobei der weitere Hohlraum (16', 16") von dem Hohlraum (16) beabstandet ist oder den Hohlraum (16) erweitert.

14. Steckverbinderanordnung (21), aufweisend einen Steckverbinder (3), insbesondere einen optischen Steckverbinder (3), und eine Anordnung (1) zum Zugabfang eines Kabels (2) gemäß einem der Ansprüche 1 bis 13.

15. Verfahren zur Montage eines Kabels (2) in einem Steckverbinder (3), aufweisend zumindest die folgenden Verfahrensschritte:
- Bereitstellen eines Kabels (2), insbesondere eines optischen Kabels (2);
- Bereitstellen eines Zugsicherungsbauteils (14) des Steckverbinders (3);
- Abschnittsweise umfangsseitiges Entfernen eines Kabelmantels (8) des Kabels (2) oder umfangsseitig vollständiges Abtrennen und Durchführen eines Teilabzugs des Kabelmantels (8), und anschließendes Einbringen des entsprechenden Kabelabschnittes in das Zugsicherungsbauteil (14), so dass ein Hohlraum (16) zwischen einer Innenseite (15) des Zugsicherungsbauteils (14) und einer unterhalb des Kabelmantels (8) verlaufenden Kabelschicht (7) des Kabels (2) gebildet wird; und
- Einbringen eines Klebstoffes (18) in den Hohlraum (16), um das Zugsicherungsbauteil (14) auf dem Kabel (2) zu befestigen.
